# EUROPEAN PATENT SPECIFICATION

(11) **EP 0 340 029 B1**
(45) Date of publication and mention of the grant of the patent: **13.07.1994**
(21) Application number: 89304306.7
(22) Date of filing: 28.04.1989
(51) Int. Cl.: H02K 19/10

(54) **Electric motor**
Elektrischer Motor
Moteur électrique

(30) Priority: 29.04.1988 CA 565594
(43) Date of publication of application: 02.11.1989
(73) Proprietor: DYNAMIC SYSTEMS INTERNATIONAL INC., Aurora Ontario L4G 3V6 (CA)
(72) Inventor: Richardson, Lyman, Thornhill Ontario L4J 4C6 (CA); Mizera, Wojciech, Downsview Ontario M3H 2L2 (CA)
(74) Representative: Opperman, Stuart Richard

(56) References cited:
- DE-C- 590 952
- FR-A- 1 165 541
- PATENT ABSTRACTS OF JAPAN vol. 4, no. 175 (E-36)(657), 3 Dec. 1980 & JP-A-55122471
- PATENT ABSTRACTS OF JAPAN vol. 5, no.153(E-76)(825), 26 Sept 1981 & JP-A-56086061

## Description

The invention relates generally to the construction of electric motors, and has specific application to the construction of switched reluctance motors.

Prior switched reluctance motors generally comprise a housing which contains a number of stator poles wound with electromagnetic coils and a rotor with complementary components. The stator poles are often integrally formed with or very much a part of the motor's support structure, the support structure being required to complete the magnetic flux paths between stator poles and rotor components that are necessary for production of motor torque. This precludes any extensive use of light-weight, non-magnetic materials. A significant amount of hat is generated within the motor housing, and steps must be taken to generate and direct air flows through the interior of the motor housing to dissipate heat, particularly in the windings and stator poles. These factors complicate manufacture of a motor and add considerably to cost, size and weight. Since requirements for back-iron and cooling increase significantly with the number of motor poles, it is comparatively rare for a commercial switched reluctance motor to be manufactured with six or more poles.

The stator poles and complementary rotor elements of a switched reluctance motor will normally have a different pitch. The general object is to ensure that one stator pole always overlays one rotor element so that a motor torque initiating rotor rotation can at any time be generated. The natural consequence of such an arrangement is relatively low torque during start-up under loads. To compensate for inherent low stating torques, manufacturers will normally oversize a motor relative to steady-state torque requirements. This further contributes to excessive weight and cost, and also to poor motor efficiency during steady-state operation. Motor efficiency is further reduced by requiring long magnetic flux paths through the motor support structure.

The basic motor geometry necessary to ensure self-starting creates additional problems. In steady-state operation only one pole in most commercially available switched reluctance motors can be energized to produce a motor torque. This results in considerable torque ripple, especially given the limited number of poles commonly associates with such a design. This arrangement also produces localized and unbalanced forces in the motor housing and support structure, which must be accommodated with a more robust support structure, further contributing to the weight of the motor.

Lastly, many prior switched reluctance motors involve commutators or slip rings. Such components further complicate manufacture and add to the cost of a motor. Also, these components are subject to excessive wear and tend to require periodic maintenance.

According to the present invention, an electric motor comprising a stator, a generally cylindrical casing with an exterior surface and an interior surface and a rotor mounted in the interior of the casing and supported for rotation about a rotational axis relative to the casing, is characterized by:
a multiplicity of apertures extending between the exterior surface and the interior surface of the casing;
the stator comprising a multiplicity of separate stator pole assemblies, each of the stator pole assemblies comprising at least a pair of magnetically-coupled poles and electrically-operable coil means operatively coupled to the stator pole assembly to produce a magnetic field in each of the stator poles, each of the stator poles having a pole face;
means releasably mounting each of the stator pole assemblies onto the exterior surface of the casing with the associated coil means external to the casing and the associated poles extending through the apertures of the casing, the stator pole assemblies being spaced-apart circumferentially about the exterior surface of the casing, the pole faces associated with the multiplicity of stator pole assemblies being oriented in a cylindrical arrangement centered about the rotational axis with a predetermined radius;
the rotor having a support portion and a multiplicity of magnetic elements attached to and spaced-apart circumferentially about the support portion, each of the magnetic elements having an element face, the element faces of the magnetic elements being oriented in a cylindrical arrangement centered about the rotational axis with a radius which is smaller by a predetermined amount than the radius of the cylindrical arrangement of the faces; and
the pole faces and the magnetic element faces being arranged such that, during each rotation of the rotor, the poles faces of the multiplicity of stator pole assemblies simultaneously and repeatedly register with the faces of the magnetic elements to form at each of the pole faces an air gap having a radial dimension corresponding to the predetermined amount and such that the magnetic elements complete a local magnetic circuit with each of the stator pole assemblies whenever the air gaps are formed, the local magnetic circuit associated with each stator pole assembly comprising the magnetically coupled stator poles of the associated stator pole assembly, the air gaps formed at the pole faces of the associated stator pole assembly, and the magnetic element or elements defining the air gaps with the pole faces of the associated stator pole assembly.

There are several advantages associated with this motor configuration. The stator poles are provided as separate assemblies conveniently mounted on the exterior of the casing thereby significantly simplifying the motor assembly. The external mounting of the stator assemblies avoids the need for special measures to direct air flows through the interior of the motor to dissipate heat. Since there is no dependence on stator supporting structures to complete magnetic circuits necessary for motor action, there is freedom to form the casing and other support structure of light-weight, non-magnetic materials, such as aluminum alloys. As will be apparent from preferred embodiments described below, such a motor can be very conveniently provided with a comparatively large number of stator poles without drastic increases in size, weight and complexity of manufacture and assembly.

It is also possible in such a motor to activate all stator poles simultaneously for the purposes of generating motor torque. This permits a comparatively smaller and lighter motor to achieve required operating torques. This arrangement also results in a relatively symmetric or balanced reaction of motor torques in the motor casing thereby reducing the structural requirements of the casing. To provide self-starting, the motor can be formed with at least two phases, but preferably at least three phases, configured such that at least one phase is at any given time capable of generating a torque to initiate rotation of the rotor. The capacity for simultaneous actuation of a number of stator poles during start-up under heavy loads avoids the need for excessive oversizing of a motor and attendant inefficiency.

Principal components of a motor such as the casing, stator or rotor may be provided with essentially a modular construction. The casing can be constructed very advantageously in sections which can be releasably coupled to define a unitary casing whose size corresponds to the number of motor phases required. Stators of various size are constructed of separate stator pole assemblies which releasably mount on the exterior of such a motor casing. If desired, a motor configuration is provided such that the motor can be readily expanded to include additional motor phases.

The invention will be better understood with reference to drawings illustrating preferred embodiments of the invention in which:
fig. 1 is a fragmented perspective view of an electric motor;
fig. 2 is an exploded perspective view of various components of the motor of fig. 1;
fig. 3 is a cross-sectional view of the motor of fig. 1 in a plane perpendicular to the rotational axis of the associated rotor;
fig. 4 is a perspective view of rotor and stator elements of the motor of fig. 1 showing how the rotor components are indexed circumferentially between stages to provide self-starting;
fig. 5 is a diagrammatic perspective view illustrating the principal components of a second embodiment of an electric motor;
fig. 6 is a cross-sectional view illustrating a housing and stator pole assembly appropriate for external mounting of the assembly on a support casing;
fig. 7 is an exploded and fragmented view of the housing and stator pole assembly of fig. 6; and,
fig. 8 is a schematic representation of control circuitry appropriate for operation of the motors.

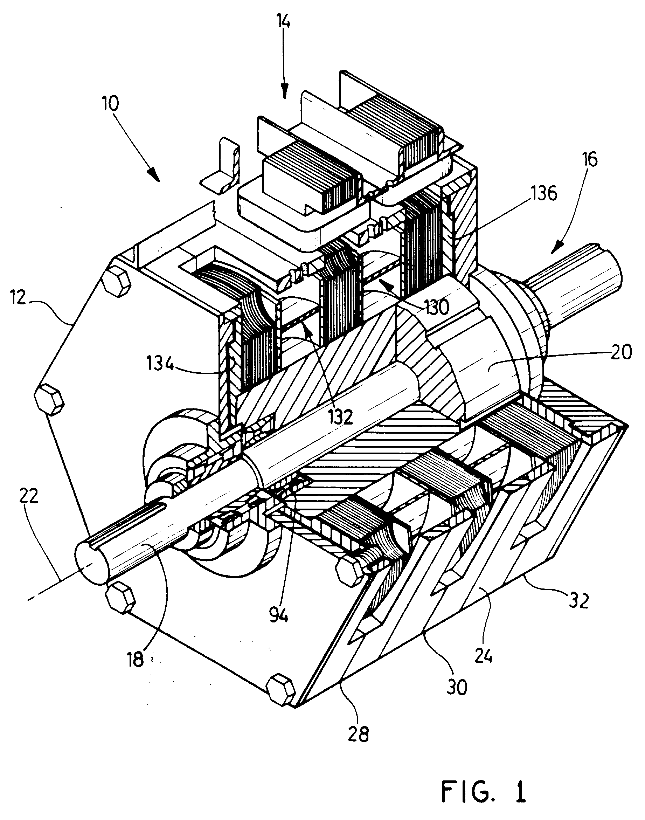

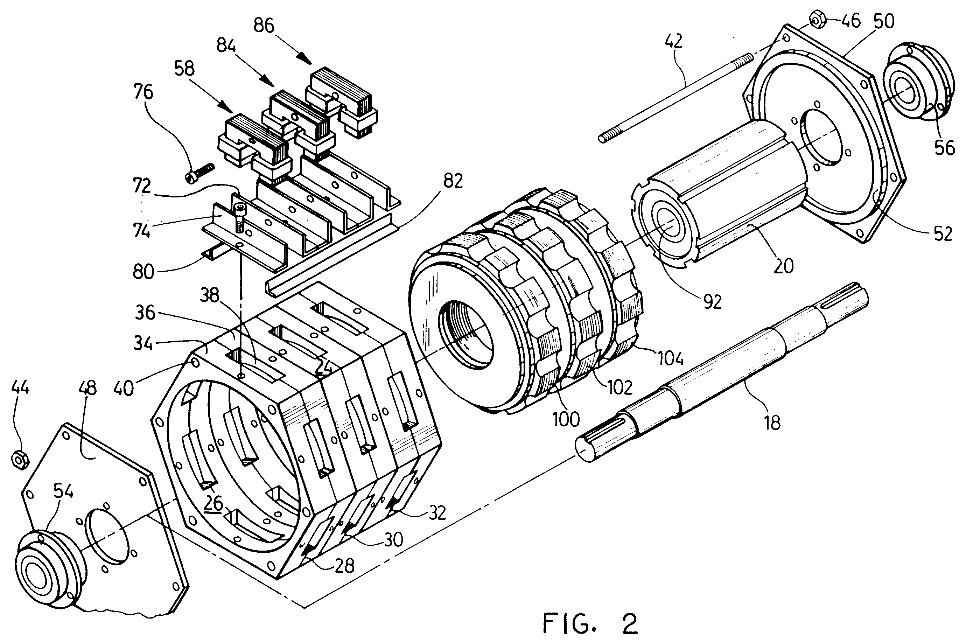

Reference is made to figs. 1-4 which illustrate a three-phase electric motor 10. The principal components of the electric motor 10 will be apparent in the views of figs. 1 and 2. These include a generally cylindrical casing 12, a stator 14 formed by a multiplicity of separate stator pole assemblies on the exterior 24 of the casing 12, and a rotor 16. The rotor 16 comprises an output shaft 18 and a support portion 20 which carries magnetic elements. The central longitudinal axis 21 of output shaft 18 constitutes the rotational axis of the rotor 16.

The casing 12 is formed of a light-weight, non-magnetic material, which is preferably aluminum or an aluminum alloy. The electromagnetically active elements of the stator 14 and rotor 16 are formed of motor iron, which will typically have a higher specific mass. The exterior surface 24 of the casing 12 has a regular (that is, equal-sided) polygonal shape in cross-section perpendicular to the rotational axis 21. In the present embodiment, the casing 12 is hexagonal in external shape with six flat sides. The interior surface 26 of the casing 12 has a generally circular shape in cross-section perpendicular to the rotational axis 21. This unusual configuration facilitates the mounting of stator pole assemblies, as described more fully below.

The casing 12 has a modular construction involving three identical casing sections 28, 30, 32 which are axially-aligned and abutted. The number of casing sections corresponds to the number of motor phases, each casing section supporting the stator pole assemblies associated with a different one of the motor phases and housing within its interior the rotor elements which co-act with the stator pole assemblies of the associated motor phase.

The casing section 28 is typical. It is constructed of two identical cylindrical parts 34, 36, each part have six exterior sides in a regular hexagonal arrangement and a pair of axially opposing end surfaces. One of the end surfaces of each part is formed with six recesses, each recess positioned centrally at a different one of the exterior sides. The recessed end surfaces of the two parts 34, 36 are abutted (as in figs. 1 and 2) to define the casing section, and the recesses of the two parts 34, 36 meet to define an aperture at each side of the casing section 26, such as the aperture 38. The casing sections 28, 30, 32 are forms with six longitudinal passages, such as the passage 40, which are aligned axially when the casing sections 28, 30, 32 are abutted and oriented to define the six flat exterior sides of the casing 12. Six rods with threaded ends and six pairs of nuts (such as the rod 42 and the two bolts 44, 46) are used to releasably secure the casing sections 28, 30, 32 to define essentially a unitary structure. The advantage of this particular casing configuration is that a single type of casing components, such as the part 34, can be manufactured to construct a motor casing of any required axial size.

A pair of opposing end plates 48, 50 close the cylindrical casing 12. These have a hexagonal periphery conforming in dimension to the exterior 24 of the cylindrical casing portion. The six threaded rods which join the sections of the cylindrical casing 12 also serve to secure the end plates 48, 50 to the cylindrical casing 12. The end plate 50, which is typical, has a circular shoulder 52 on its inside face, dimensioned to seat seat closely within the circular interior of the cylindrical casing 12. Each end plate has a central opening, and a pair of bearings 54, 56 seated in the openings serve to support opposing ends of the rotor output shaft 18.

The stator pole assembly 58 is typical, and constitutes a modular component for construction of the stators. It comprises a generally U-shaped member 60 formed of magnetic material (motor iron), laminated to reduce the formation of eddy currents. The U-shaped member 60 has a pair of legs 62, 64 each constituting one pole of the assembly, and a cross-bar 65 which magnetically couples the legs 62, 64. The stator poles 62, 64 extend through the aperture 38 into the interior of the casing 12, and are terminated with or define a pair of pole faces 66, 68. The pole faces 66, 68 are curved according to the radius of curvature of the interior surface 26 of the casing 12 and are for practical purposes mounted flush with the interior casing surface 26. A coil is located about each of the stator poles 62, 64 and can be electrically energized to induce a magnetic flux in the associated stator pole and more generally in the stator pole assembly. A single coil wound about the cross-bar 65 would be satisfactory, as in the second embodiment of a motor described below.

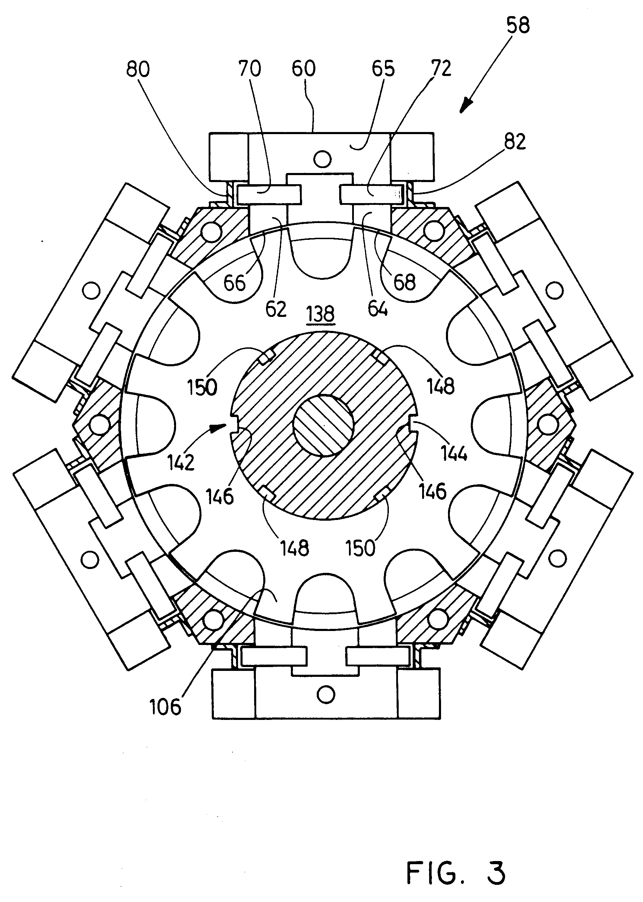

Each stator pole assembly is conveniently mounted on the exterior 24 of the casing 12 in a similar manner. The stator pole assembly 58 is once again typical and mounting details are apparent in figs. 2 and 3. A bracket assembly is provided which comprises two angle-brackets 72, 74 which engage opposing sides of the U-shaped member 60. The two angle-brackets 72, 74 and the cross-bar 65 have openings which register to permit attachment of the brackets to the pole assembly by means of a bolt 76 and nut 78. The bracket assembly includes two additional angle-brackets 80, 82 which serve as spacers and have flat bottom surface which are mounted flush against the flat side of the casing 12. The result is that the stator pole assembly is entirely external to the casing 12 except for end portions of the poles 62, 64 which extend into the interior of the casing 12. It will be apparent from the drawings that the pole faces of the stator pole assemblies of all three phases are in a generally circular cylindrical arrangement, that is, they tend to lie on a hypothetical circular cylindrical surface. In this embodiment, the hypothetical cylindrical surface is substantially coincident with the interior surface 26 of the casing 12, and the radius of the cylindrical arrangement corresponds to the radius of the interior casing surface 26.

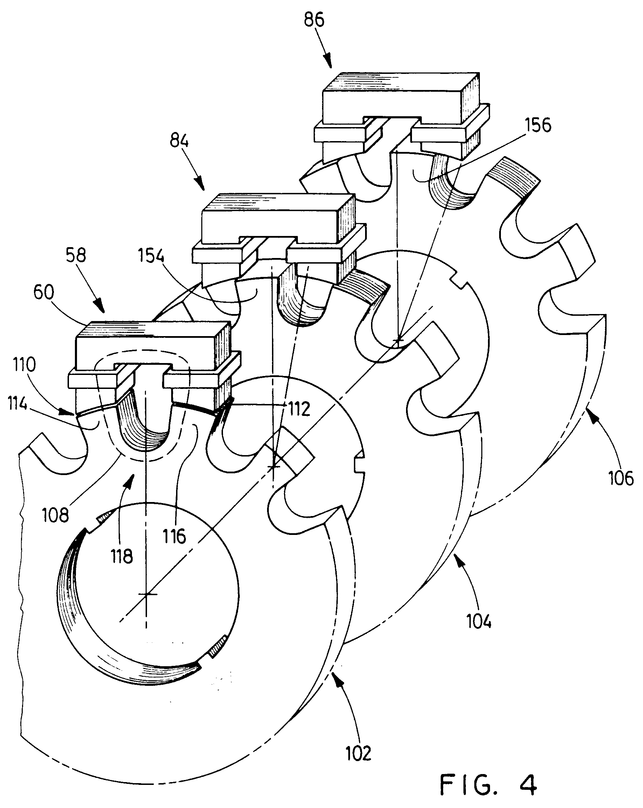

In each phase, the U-shaped members of the associated stator pole assemblies are aligned in a common hypothetical plane perpendicular to the rotational axis 21 (substantially the plane of fig. 3). The stator pole assemblies of each phase are equally spaced circumferentially, and the pole faces are in fact equally-spaced circumferentially by a common predetermined angle, namely, 30 degrees. It will also be noted that each U-shaped member of each motor phase is axially in registration with another U-shaped member in each of the other motor phases. For example, the stator pole assemblies 58, 84, 86 of the three motor phases exhibit axial registration (see fig. 4).

The support member 20 of the rotor 16 is preferably formed of a light-weight, non-magnetic material such as aluminum or an aluminum alloy. The support member 20 has a central longitudinal passage which receives the rotor output shaft 18. It is releasably mounted for rotation with the rotor output shalt 18 by a pair of cylindrical friction elements 94, 96. The support member 20 has a generally cylindrical outer surface which is formed with six longitudinal open-ended grooves.

Three generally annular, toothed members 100, 102, 104 formed of magnetic material (motor iron) are mounted on the support member 20. Each toothed member has a central aperture which receives the support member 20. Each is formed with twelve peripheral teeth, such as the tooth 106 associated with the toothed member 100, which are equally spaced-apart circumferentially by the same predetermined angle of 30 degrees associated with the spacing of the stator pole faces of each motor phase. The outer faces of the teeth are curved according to a radius of curvature corresponding to the radius of the inner cylindrical casing surface less a predetermined amount in the range of .25 mm to 1 mm. The outer faces of all teeth are oriented in a cylindrical arrangement having a radius which is once again the radius of the inner cylindrical casing surface less the predetermined amount. The predetermined amount consequently corresponds to the radial size of the air gaps which will occur between the teeth and the stator poles when registered during rotation of the rotor 16.

The relationship between the stator pole face of the first phase and the teeth of the first toothed member 100 will be apparent with reference to fig. 3. The number of stator pole faces corresponds to the number of teeth on the toothed member 100. The common pitch angle of the pole faces and the teeth ensures that during each rotation of the rotor 16 the pole faces and radially outer faces of the teeth simultaneously register as shown in fig. 3. This registration occurs repeatedly during each revolution, namely twelve times corresponding to the number of pole faces and teed As outer surfaces of the teeth register with the stator pole faces, an air gap having a radical extent corresponding to the predetermined amount is formed simultaneously between each pole face and a different one of the teeth of the rotor 16. Those skilled in the art will appreciate that the coils associated with the stator pole assemblies will be energized electrically just as the air gaps are forming to produce a motor torque and would be de-energized prior to reaching the fully registered state apparent in fig. 3. A similar relationship is observed by the pole faces and radially outer faces of the teeth in the other two motor phases. Accordingly, all stator pole assemblies can be energized a total of twelve times during each revolution to generate motor torque. Because of the large number of poles associated with each phase, this permits generation of fairly substantial torques even a low speeds or at start-up.

The arrangement of the stator poles and rotor teeth results in the formation of local magnetic circuits at each of the stator pole assemblies as the relevant air gaps are formed. Referring to fig. 4, a local magnetic path 108 associated with a stator pole assembly 58 has been indicated with phantom lines. The circuit comprises the two poles 62, 64, the air gaps 110, 112 formed at the pole faces 66, 68, and the two teeth 114, 116 which serve to define the air gaps 110, 112 associated with the particular stator pole assembly. The poles 62, 64 are of course magnetically coupled by the cross-bar 65, and the two teeth 114, 116 are magnetically coupled by adjoining magnetic material 118. The cylindrical casing 12 serves only structural functions, supporting the stator poles and reacting motor torques, but is not required to complete magnetic circuits involving the stator poles. Accordingly, the casing 12 can be formed of a light-weight non-magnetic material such as aluminum, plastic or any other suitable material. The formation of localized magnetic circuits minimizes the length of required magnetic paths thereby reducing power losses.

The toothed rotor members are constructed of a multiplicity of identical annular plates of magnetic material (motor iron). These are separated into three sets of plates in axially side-by-side relationship by annular spacers 130, 132, centrally apertured to receive the support member 20. Each set of plates defines one of the toothed rotor members, the spacers 130, 132 separating the sets such that each of toothed members 100, 102, 104 is located within a different one of the three casing sections 28, 30, 32. A pair of end spacers 134, 136 serves to secure the arrangement.

An outer plate 138 associated with the toothed member 100 is typical and apparent in the view of fig. 3. The plate 138 has a central opening which receives the support portion and a multiplicity of radially-outwardly extending tabs which are equally spaced-apart circumferentially. These tabs serve when registered with similar tabs on the other plates to define the teeth of the toothed member 100. The plate 138 also has a pair of diametrically opposing tabs 142, 144 which extend radially inwardly into a paired set of diametrically opposing grooves 146 associated with the support member 20, this arrangement serving to connect the plate 138 to the rotor output shaft 18.

The six grooves of the support member 20 are effectively divided into three two-groove sets. All plates of the first toothed member 100 have tabs located in the set of grooves 146 as mentioned above. During assembly, the tabs of the various plates are simply inserted into the grooves and slid along the support member 20 to define the first toothed member 100. Spacer 130 can then be installed. A second set of plates are then installed with the internal tab located in grooves 148. The second spacer 132 may then be installed. The last set of plates is installed with internal groove tabs in the grooves 150. End spacers 134, 136 serve to retain the resulting structure.

The relative circumferential spacing of the sets of grooves should be noted. Each set is offset relative to the circumferentially succeeding set by 50 degrees (60 degrees less an indexing factor of 10 degrees). This results in each toothed member being indexed relative to the other two motor phases by a fraction (one-third) of the common spacing angle between the teeth. The overall effect is apparent in fig. 4. For example, the tooth 114 associated with the first motor phase is fully registered with a stator pole. A corresponding tooth 154 in the second phase is indexed clockwise by 10 degrees. The corresponding tooth 156 in the third phase is indexed clockwise relative to the tooth of the first toothed member by two-thirds of the common angle, namely, 20 degrees. The result is that the teeth of one of the toothed members 100, 102, 104 will at any instance be positioned for generation of torque tending to rotate the rotor 16 if the coils associated with the particular phase are energized. In fig. 4, the teeth of the third phase are so positioned (assuming clockwise rotation of the rotor 16). In a multiphase motor embodying the basic design, it is possible to provide self-starting with only two phases, but in practice it is preferable that at least three phases observe the indexing arrangement just described to ensure proper self-starting. It will be apparent that since twelve poles of one phase will be positioned for start-up of the motor 10 a fairly substantial starting torque can be developed, unlike many prior motors, and that no substantial oversizing of the motor 10 is required to accommodate start-up under load.

The motor 10 will be seen to embody modular construction principles. The cylindrical motor casing can be built up to any required axial dimension from a number of releasably connected casing sections. Whatever number of stator poles are required can be conveniently provided by releasably securing individual and separate stator pole assemblies at the apertures associated with each of the casing sections. The external mounting of the poles not only facilitates cooling, but also reduces the amount of labour required to assemble a stator to an extent which has not heretofore been possible with prior motor designs. The rotor 16 itself has a modular construction, the basic building units being identical annular plates and spacers. This construction has the notable advantage, not characteristic of prior motors, that an existing motor can be very readily expanded to add additional motor phases if required by a user. This simply involves adding additional casing sections, additional stator pole assemblies, and additional rotor plates and spacers. The principal components which must be changed are the rotor output shaft 18 and the support member 20, both of which would have to be lengthened. The support member 20 might be provided with additional sets of paired grooves to accommodate the additional phases and to provide a relative measure of indexing between each phase. This is desirable to further reduce torque ripple, but is by no means critical. For example, the same set of six grooves could be retained and the additional phases could be aligned with the first, second and third phases. A consideration which may limit expansion of an existing motor is possible flexing of the rotor shaft 18.

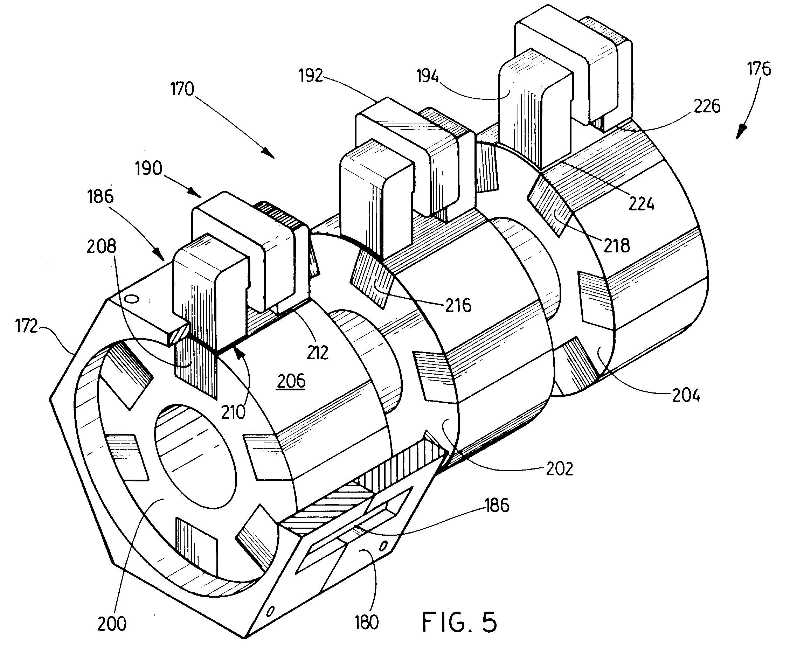

Fig. 5 illustrates a second three-phase motor 170 embodying the invention. Only those components necessary to understand how magnetic circuits are formed in the motor 170 and how self-starting is provided have been illustrated. The motor 170 may be seen to comprise a generally cylindrical casing 172, a multiplicity of stator pole assemblies, and a rotor 176. The output shaft of the rotor has not been illustrated, but would be mounted to the casing 172 for rotation in substantially the same manner as the rotor output shaft 18 is mounted.

The cylindrical casing 172 is substantially identical to that described above. It is formed of three axially-aligned, two-part casing sections (only one typical casing section 180 being illustrated). Each casing section once again corresponds to one of the the motor phases, the section 180 corresponding to the first motor phase. Each casing has an exterior surface with six sides in a regular hexagonal configuration as viewed in cross-section perpendicular to the rotational axis. Each side of each casing section is formed with one aperture or slot, such as the aperture 186 of the casing section 180. These apertures are aligned with the rotational axis to receive stator pole assemblies oriented generally parallel to the motor's rotational axis. Six stator pole assemblies would be associated with each phase and would be mounted with appropriate brackets one to each side of the casing sections as in the first embodiment of the motor 10.

A stator pole assembly 190 of the first phase is typical. As apparent in fig. 5, the stator pole assembly 190 lies in a plane containing the rotational axis of the rotor 176. The other stator assemblies (not illustrated) are similarly oriented relative to the rotational axis of the rotor 176, circumferentially in registration with one another, and equally-spaced circumferentially by a predetermined angle, namely, 60 degrees. The stator assemblies of the second and third motor phases are similarly configured.

It should be noted that one stator pole assembly of each phase is axially aligned with a stator pole assembly of either of the other two phases. The stator pole assemblies 190, 192, 194, respectively belonging to the first, second and third motor phases, are exemplary of this axial alignment. The pole faces defined by the stator pole assemblies of the three phases are once again in a cylindrical arrangement having a radius corresponding to that of the inner circular cylindrical surface of the casing 172. The pole faces are curved according to the radius of curvature of the inner casing surface and are mounted for practical purposes flush with that surface. The principal difference with respect to the motor 10 is that the stator poles of each phase are now in two axially spaced-apart rings, rather than a single ring in a single common plane.

The rotor 176 has a portion which supports magnetic elements which co-act with the stator poles. This support portion is constructed as three separate support members 200, 202, 204 which are axially aligned. Each member has a central passage which receives the motor output shaft (not illustrated). Each support member carries the magnetic rotor elements associated with a different one of three motor phases. The support member 200, which is typical, is formed of a block of aluminum It has a cylindrical outer surface formed with six longitudinal recesses each containing a laminated bar of magnetic material (motor iron) secured to the support member 200 by means of screws. The bars are equally spaced-apart circumferentially by the same angle as the stator pole assemblies and are in registration circumferentially. The magnetic bar 208 which is typical has a sufficient axial length that its outer face can simultaneously form air gaps 210, 212 with both poles of the stator pole assembly 192. As these gaps 210, 212 are formed, the magnetic bar 208 completes a local magnetic circuit with the stator pole assembly 192. That magnetic circuit comprises the two poles of the assembly 192, the air gaps 210, 212, and the bar 208. The outer pole faces are curved according to the radius of curvature of the inner cylindrical surface of the casing 172 less a predetermined amount corresponding to the expected radial size of the air gaps to be formed. It will be appreciated that, as with the first embodiment of the motor 170, similar air gaps and magnetic circuits are simultaneously formed at each of the stator pole assemblies by a different one of the rotor bars. This occurs six times during each rotation of the motor 170. Accordingly, the twelve stator poles of each phase can be energized simultaneously and repeatedly to produce a motor torque thereby providing considerable motor action, relatively little torque ripple and even reaction of forces circumferentially around the casing 172.

The magnetic bars associated with the support members 202, 204 of the second and third phases are identically oriented. However, the sets of bars of each additional motor phase are indexed circumferentially relative to the bars of the first phase by a fraction of the common angle separating the magnetic elements. In fig. 5, the magnetic bar 208 of the first phase is shown fully registered with the poles of the stator assembly 190. The corresponding magnetic bar 216 of the second phase is indexed by 10 degrees clockwise, and the corresponding bar 218 of the third phase, by 20 degrees. Accordingly, at any given time, the stator poles and magnetic bars of at least one phase will be oriented for production of a motor torque when the associated coils are energized. In the orientation of fig. 5, the third phase is currently so oriented (assuming clockwise rotation). In particular, the bar 218 of the third phase will be seen to complete a magnetic circuit with the stator poles of the assembly 194, that circuit comprising the stator poles 220, the air gaps 224, 246 and the magnetic bar 218 itself. Similar local magnetic circuits are simultaneously formed with each of the stator pole assemblies (not illustrated) of the third phase.

It will be noted that in both the first and second motors 10, 170 there is an axial alignment of the stator pole assemblies between the three phases. Relative circumferential indexing of the rotor elements is used in both motors to provide self-starting thereby eliminating the need for a starter motor. The stator pole assemblies might instead be indexed circumferentially for such purposes with the magnetic elements (teeth or bars) axially aligned between phases; however, the overall axially-aligned arrangement of stator poles in the two motors is preferred as this provides a uniformity in the construction of the casing, particular in the location of the apertures required to mount the stator poles. This is particularly significant if the casing is to have a regular polygonal shape, which is singularly advantageous for external mounting of the poles. Indexing of the stator pole assemblies on such a casing would unduly complicate the placement of the required apertures and the mounting of the stator pole assemblies.

The second motor 170 once again embodies modular construction principles. The casing 172 can be extended, as before, by providing a casing section for each phase required. Individual stator pole assemblies can be releasably mounted to the exterior of the casing 172 to form the stator section required for each phase. A separate rotor magnetic element support and set of magnetic bars can be provided for each motor phase as well. Basically, a motor can be built or an existing motor of this construction can be expanded by adding axially spaced-apart phases until a motor of required torque is achieve The only major component which must of necessity be changed to create a larger motor or to expand an existing motor is the rotor output shaft.

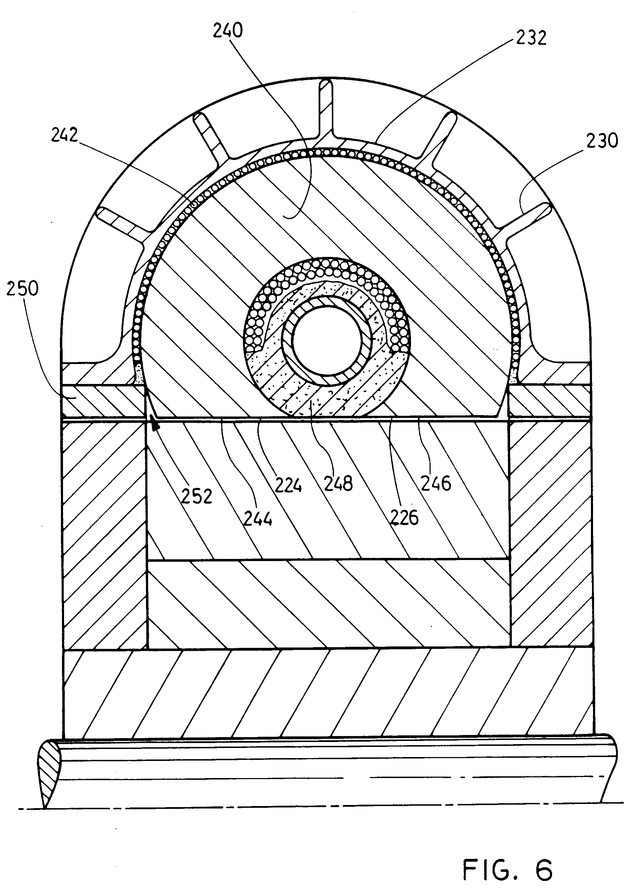

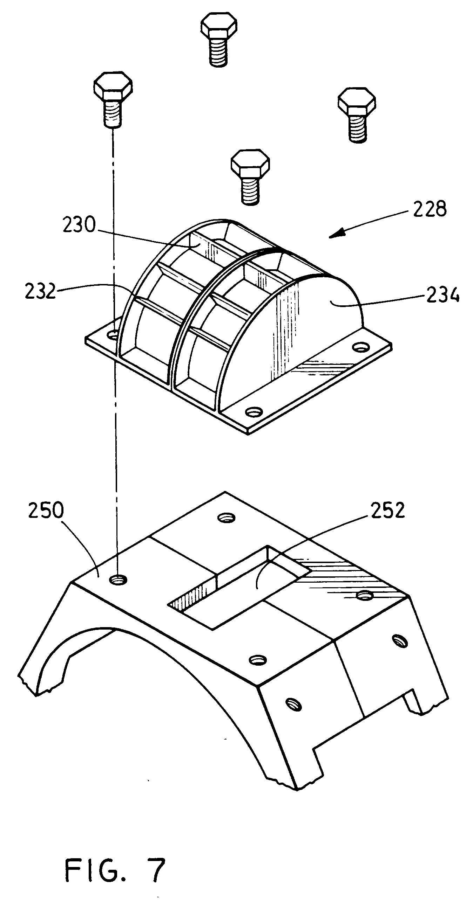

Figs. 6 and 7 show an alternative means for mounting stator pole assemblies on the exterior of a motor such as either of the motors 10, 170. The mounting means includes a housing 228 formed of a material having good heat conducting properties, such as aluminum or an aluminum alloy, and having fins (such as the fin 230) which provide a large heat radiating surface. The housing 228 is formed in two identical parts 232, 234 with central cylinder portions that mate when the housing sections joined, but a two-part construction is not critical. The housing 228 encloses a U-shaped stator pole assembly 240 (in particular a part-toroidal shape). The assembly 240 has a single electromagnetic winding 242 for purposes of producing a magnetic flux in the associated pair of poles 244, 246. A heat-conductive potting compound 248, such as conventionally used to pot electronic circuits, fills the housing 228 and intimately contacts both interior surfaces of the housing 228 and exterior surfaces of the winding 242 and the stator poles 244, 246, placing the stator pole assembly 240 and the housing 228 in thermal communication and enhancing heat transfer to the housing 228. The housing 228 can be mounted flush against the flat external surface of a motor casing 250 with the poles 244, 246 extending through an aperture 252 formed in the casing, substantially as illustrated in fig. 6. The housing 228 and associated stator pole assembly 240 constitute a single unit which can be used in the fabrication of motor stators. The arrangement precludes introduction of contaminants through the aperture 252 into the interior of the motor, which may be particularly important in certain operating environments. It also protects the externally mounted stator pole assemblies and provides for proper heat dissipation, but avoids the introduction of an additional protective casing and means for drawing air flows through the protective casing.

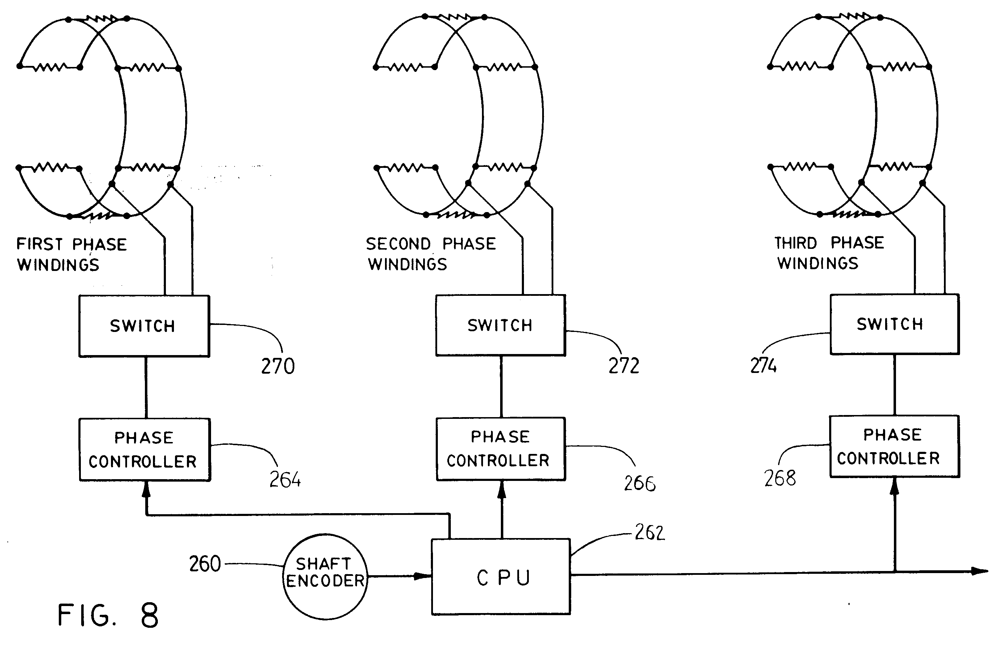

Fig. 8 shows a control circuit which can be used to operate either of the motors. Conventional switching principles are applicable to the motors, and accordingly only an overall schematic representation has been provided. In fig. 8, the control circuitry is shown in association with the motor 10. This includes a shaft encoder 260 which produces a signal indicating the position of the rotor relative to the stator and from which the control circuitry can derive in a conventional manner timing data which determines when the stator assemblies of each phase should be energized. This signal is processed by a microprocessor 262 and phase controllers 264, 266, 268 each associated with a different one of the motor phases. It is noteworthy that only three triac switches 270, 272, 274 are required, use the multiplicity of switches which are commonly associated with the most prior of switch reluctance motors. The switch 270 which is typical is operatively coupled to coils associated with each of the stator pole assemblies of the first phase. The switch 270 can be controlled in a conventional manner to initiate the application of current to these coils, this being done simultaneously for all coils in the particular phase. It will also be noted that no slip rings or commutators are required.

## Claims

1. An electric motor (10 or 170) comprising a stator (14), a generally cylindrical casing (12 or 172) with an exterior surface (24) and an interior surface (26) for the stator (14) and a rotor (16 and 176) mounted in the interior of the casing (12 or 172) and supported for rotation about a rotational axis (22) relative to the casing (12 or 172), the motor (10 or 170) being characterized by:
a multiplicity of apertures (38 or 186) extending between the exterior surface (24) and the interior surface (26)of the casing (12 or 172);
the stator (14) comprising a multiplicity of separate stator pole assemblies (54 or 190), each of the stator pole assemblies (54 or 190) comprising at least a pair of magnetically-coupled poles (62, 64) and electrically-operable coil means (70, 72) operatively coupled to the stator pole assembly (54 or 190) to produce a magnetic field in each of the stator poles (62, 64), each of the stator poles having a pole face (66 or 68);
means (72, 74, 76, 80, 82) releasably mounting each of the stator pole assemblies (54 or 190) onto the exterior surface (24) of the casing (12 or 172) with the associated coil means (70, 72) external to the casing (12 or 172) and the associated poles (62, 64) extending through the apertures (36 or 186) of the casing (12 or 172), the stator pole assemblies (54 or 190) being spaced-apart circumferentially about the exterior surface (24) of the casing (12 or 172), the pole faces (66, 68) associated with the multiplicity of stator pole assemblies (54 or 190) being oriented in a cylindrical arrangement centered about the rotational axis (22) with a predetermined radius;
the rotor (16 or 176) having a support portion (20 or 200) and a multiplicity of magnetic elements (114, 116 or 208) attached to and spaced-apart circumferentially about the support portion (20 or 200), each of the magnetic elements (114, 116 or 208) having an element face, the element faces of the magnetic elements (114, 116 or 208) being oriented in a cylindrical arrangement centered about the rotational axis (22) with a radius which is smaller by a predetermined amount than the radius of the cylindrical arrangement of the faces (66, 68); and
the pole faces (66, 68) and the magnetic element faces being arranged such that, during each rotation of the rotor (16, 176), the poles faces (66, 68) of the multiplicity of stator pole assemblies (54 or 190) simultaneously and repeatedly register with the faces of the magnetic elements (114, 116 or 208) to form at each of the pole faces (66, 68) an air gap (110 or 112; or 210 or 212) having a radial dimension corresponding to the predetermined amount and such that the magnetic elements (114, 116 or 208) complete a local magnetic circuit (108) with each of the stator pole assemblies (54 or 190) whenever the air gaps (110, 112 or 210, 212) are formed, the local magnetic circuit (108) associated with each stator pole assembly (54 or 190) comprising the magnetically coupled stator poles (62, 64) of the associated stator pole assembly (54 or 190), the air gaps (110, 112 or 210, 212) formed at the pole faces (66, 68) of the associated stator pole assembly (54 or 190), and the magnetic element or elements (114, 116 or 208) defining the air gaps (110, 112 or 210, 212) with the pole faces (66, 68) of the associated stator pole assembly (54 or 190).

2. An electric motor (10 or 170) according to claim 1, characterised in that the casing (12 or 172) is formed of non-magnetic material which has a specific mass lower than that of materials constituting the poles (62, 64) of the stator pole assemblies (54 or 190) and the magnetic elements (114, 116 or 208) of the rotor (16 or 176).

3. An electric motor (10 or 170) according to claim 1 or 2, characterised in that each of the stator pole assemblies (54) comprises a generally U-shaped member (60) formed of magnetic material, the U-shaped members (60) of the stator pole assemblies (54) being located in a common plane perpendicular to the rotational axis (22), and the pole faces (66, 68) of the multiplicity of stator pole assemblies (54) being equally spaced-apart circumferentially in the common plane by a predetermined angle.

4. An electric motor (170) according to claim 1 or 2, characterised in that each of the stator pole assemblies (190) comprises a generally U-shaped member formed of magnetic material, each of the U-shaped members is aligned with a plane containing the rotational axis (22), and the U-shaped members (60) are in registration circumferentially and equally-spaced circumferentially.

5. An electric motor (10 or 170) according to any preceding claim, characterised in that the multiplicity of stator pole assemblies (54 or 190) and the multiplicity of magnetic elements (114, 116 or 208) constitute a first phase of the electric motor (10 or 170), the electric motor (10 or 170) comprising second and third additional motor phases substantially identical to the first phase, the second and third motor phases comprising stator pole assemblies (84, 86 or 192, 194) mounted on the exterior of the casing (12 or 172) and magnetic elements (154, 156 or 216, 218) attached to the support portion (20 or 200, 202, 204) of the rotor (16 or 176).

6. An electric motor (10 or 170) according to claim 5, characterised in that the magnetic elements (54, 84, 86 or 190, 192, 194) of each of the motor phases are indexed circumferentially relative to the magnetic elements (54, 84, 86 or 190, 192, 194) of the other motor phases such that at least one of the motor phases is capable of generating a torque to rotate the motor (16 or 176) at any given time when the coil means (70, 72) associated with the one motor phase are electrically-energized.

7. An electric motor (10) according to claim 5 or 6, characterised in that the support portion (20) of the rotor (16) has a generally cylindrical outer surface formed with open-ended longitudinal grooves (146, 148, 150);
the rotor (16) comprises a multiplicity of identical annular plates (138) of magnetic material, each plate (138) having a central opening which receives the support portion (20) and tabs (142, 144) extending radially inwardly into the grooves (146) of the support portion (20 or 200), each plate (138) having a periphery formed with a multiplicity of tabs which extend radially outwardly and which are equally spaced circumferentially about the periphery; and,
the rotor (16) comprises spacers (130, 132) separating the plates (138) into three sets of plates in axially side-by-side relationship, each set of plates defining an annular member (100, 102 or 104) with peripheral teeth (114, 116, 154, 156) which are equally-spaced circumferentially by a common predetermined angle, the teeth (114, 116, 154, 156) of each annular member (100, 102 or 104) constituting the magnetic elements (114, 116, 154, 156) of a different one of the motor phases.

8. An electric motor (10) according to claim 7, characterised in that the grooves (146, 148, 150) of the support member are arranged in sets of grooves (146, 148, 150), one set of grooves (146, 148 or 150) being associated with each of the annular members (100, 102 or 104) and receiving the tabs (142, 144) of the plates (138) defining the annular member (100);
the sets of grooves (146, 148, 150) being circumferentially arranged such that the teeth (114, 116, 154, 156) associated with each of the annular members (100, 102, 104) are indexed circumferentially by a fraction of the common predetermined angle relative to the teeth (114, 116, 154, 156) of the other annular members (100, 102, 104), the fraction being selected such that at least one of the motor phases is capable of generating a torque to rotate the rotor (16) at any given time when the coil means (70, 72) associated with the stator pole assemblies (54 or 190) of the at least one motor phase are electrically-energized.

9. An electric motor according to claim 1, characterised in that the stator pole assemblies (240) comprises a housing (228) formed of a heat-conducting material and the coil means (242) and the poles (244, 246) of the stator pole assembly (240) are mounted within the housing (228) with the poles (244, 246) extending from the interior of the housing.

10. An electric motor according to claim 9, characterised in that the interior of each housing (228) contains a heat-conductive material (248) intimately contacting the housing (228) and each of the poles (244, 246) and coil means (242) mounted within the housing (228).

## Patentansprüche

1. Elektromotor (10 oder 170), enthaltend einen Stator (14),
ein in der Regel zylindrisches Gehäuse (12 oder 172) mit einer äußeren (24) sowie einer inneren Oberfläche (26) für den Stator (14) und
einen Rotor (16 und 176), der in das Innere des Gehäuses (12 oder 172) montiert ist und um eine Achse (22) zum Gehäuse (12 oder 172) drehbar gehaltert ist; dadurch gekennzeichnet,
daß zwischen der äußeren (24) und der inneren Oberfläche (26) des Gehäuses (12 oder 172) Öffnungen (38 oder 186) bestehen;
daß der Stator (14) getrennte Statorpolbauteile (58 oder 190) aufweist, wobei jedes Statorpolbauteil (58 oder 190) mindestens ein Paar magnetisch gekoppelter Pole (62, 64) und eine elektrisch erregbare Wicklung (70, 72) hat, die funktionell mit dem Statorpolbauteil (58 oder 190) gekoppelt ist, so daß in jedem Statorpol (62, 64), wobei jeder Statorpol eine Polfläche (66 oder 68) hat, ein Magnetfeld erzeugt werden kann;
daß Einrichtungen (72, 74, 76, 80, 82) das jeweilige Statorpolbauteil (58 oder 190) auf der äußeren Oberfläche (24) des Gehäuses (12 oder 172) mit der zugeordneten Wicklung (70, 72) außen am Gehäuse (12 oder 172) lösbar befestigen und die zugehörigen Pole (62, 64) durch die Öffnungen (38 oder 186) des Gehäuses (12 oder 172) verlaufen, wobei die Statorpolbauteile (58 oder 190) unter Abstand um die äußere Oberfläche (24) des Gehäuses (12 oder 172) herum angeordnet sind und die Polflächen (66, 68), die zu den Statorpolbauteilen (58 oder 190) gehören, zylinderhaft um die Rotationsachse (22) mit einem vorbestimmten Radius zur Mitte ausgerichtet sind;
daß der Rotor (16 oder 176) ein Halteteil (20 oder 200) hat sowie magnetische Elemente (114, 116 oder 208), die mit Abstand voneinander ringsherum um das Halteteil (20 oder 200) montiert sind, wobei die magnetischen Elemente (114, 116 oder 208) jeweils eine Elementfläche haben und diese (114, 116 oder 208) zylinderhaft um die Rotationsachse (22) zur Mitte ausgerichtet sind, wobei deren Radius um einen vorbestimmten Wert kleiner ist als der Radius der zylindrischen Anordnung der Flächen (66, 68); und
daß die Polflächen (66, 68) und die Magnetelementflächen so angeordnet sind, daß bei jeder Umdrehung des Rotors (16, 176) die Polflächen (66, 68) der Statorpolbauteile (58 oder 190) gleichzeitig und wiederholt mit den Flächen der Magnetelemente (114, 116 oder 208) so zusammenkommen, daß an den Polflächen (66, 68) jeweils ein Luftspalt (110 oder 112; oder 210 oder 212) mit einer Radialabmessung gemäß dem vorbestimmten Wert gebildet wird und daß die magnetischen Elemente (114, 116 oder 208) einen örtlichen magnetischen Kreis (108) mit dem jeweiligen Statorpolbauteil (58 oder 190) schließen, sobald die Luftspalte (110, 112 oder 210, 212) bestehen, wobei der örtliche magnetische Kreis (108), der zum jeweiligen Statorpolbauteil (58 oder 190) gehört, umfaßt: die magnetisch gekoppelten Statorpole (62, 64) des zugehörigen Statorpolbauteils (58 oder 190); die Luftspalte (110, 112 oder 210, 212), die an den Polflächen (66, 68) des zugehörigen Statorpolbauteils (58 oder 190) gebildet werden; und das magnetische Element oder die magnetischen Elemente (114, 116 oder 208), die mit den Polflächen (66, 68) des zugehörigen Statorpolbauteils (58 oder 190) die Luftspalte (110, 112 oder 210, 212) bestimmen.

2. Elektromotor (10 oder 170) nach Anspruch 1, dadurch gekennzeichnet, daß das Gehäuse (12 oder 172) aus nichtmagnetischem Material hergestellt ist, dessen spezifische Masse geringer ist als die der Materialien, die die Pole (62, 64) der Statorpolbauteile (58 oder 190) und die magnetischen Elemente (114, 116 oder 208) des Rotors (16 oder 176) bilden.

3. Elektromotor (10 oder 170) nach Anspruch 1 oder 2, dadurch gekennzeichnet, daß jedes Statorpolbauteil (58) ein im allgemeinen U-förmiges Glied (60) aufweist, das aus magnetischem Material hergestellt ist, wobei die U-förmigen Glieder (60) der Statorpolbauteile (58) in einer gemeinsamen Ebene senkrecht zur Rotationsachse (22) angeordnet sind und die Polflächen (66, 68) der Statorpolbauteile (58) in der gemeinsamen Ebene gleichmäßig ringsherum mit Abstand voneinander unter einem bestimmten Winkel angeordnet sind.

4. Elektromotor (170) nach Anspruch 1 oder 2, dadurch gekennzeichnet, daß jedes Statorpolbauteil (190) ein im allgemeinen U-förmiges Glied hat, das aus magnetischem Material hergestellt ist, wobei jedes U-förmige Glied zu einer Ebene, die die Rotationsachse (22) enthält, ausgerichtet ist und die U-förmigen Glieder (60) im Umfang passend und gleichmäßig beabstandet sind.

5. Elektromotor (10 oder 170) nach irgendeinem vorhergehenden Anspruch, dadurch gekennzeichnet, daß die Statorpolbauteile (58 oder 190) und die magnetischen Elemente (114, 116 oder 208) eine erste Phase des Elektromotors (10 oder 170) bilden, wobei der Elektromotor (10 oder 170) zusätzlich eine zweite und eine dritte Motorphase hat, die im wesentlichen identisch zur ersten Phase sind, und die zweite und die dritte Motorphase Statorpolbauteile (84, 86 oder 192, 194) haben, die außen am Gehäuse (12 oder 172) montiert sind, und magnetische Elemente (154, 156 oder 216, 218), die am Halteteil (20 oder 200, 202, 204) des Rotors (16 oder 176) befestigt sind.

6. Elektromotor (10 oder 170) nach Anspruch 5, dadurch gekennzeichnet, daß die magnetischen Elemente (58, 84, 86 oder 190, 192, 194) der jeweiligen Motorphase zu den magnetischen Elementen (58, 84, 86 oder 190, 192, 194) der anderen Motorphasen umfangsindexiert sind, so daß mindestens eine der Motorphasen zu jeder Zeit eine Drehkraft zum Drehen des Motors (16 oder 176) erzeugt, wenn die zu der einen Motorphase zugehörige Wicklung (70, 72) elektrisch erregt wird.

7. Elektromotor (10) nach Anspruch 5 oder 6, dadurch gekennzeichnet, daß das Halteteil (20) des Rotors (16) eine im allgemeinen zylindrische Außenfläche hat, die mit am Ende offenen Längsnuten (146, 148, 150) ausgebildet ist;
der Rotor (116) eine Anzahl identischer ringförmiger Platten (138) aus magnetischem Material aufweist, wobei jede Platte (138) eine Mittelöffnung hat, die das Halteteil (20) und die Zungen (142, 144), die radial nach innen in die Nuten (146) des Halteteils (20 oder 200) gehen, aufnimmt; jede Platte (138) einen Umfang mit Zähnen hat, welche radial nach außen stehen und um den Umfang gleichmäßig beabstandet angeordnet sind; und,
der Rotor (16) Abstandshalter (130, 132) hat, die die Platten (138) in ihrer axialer Beziehung nebeneinander in drei Plattensätze trennen, wobei jeder Plattensatz ein ringförmiges Glied (100, 102 oder 104) mit Zähnen (114, 116, 154, 156) aufweist, welche mit einem bestimmten gemeinsamen Winkel gleichmäßig mit Abstand im Umfang angeordnet sind, und die Zähne (114, 116, 154, 156) des jeweiligen ringförmigen Glieds (100, 102 oder 104) die magnetischen Elemente (114, 116, 154, 156) einer jeweils anderen Motorphase bilden.

8. Elektromotor (10) nach Anspruch 7, dadurch gekennzeichnet, daß die Nuten (146, 148, 150) des Halteglieds in drei Nutensätze (146, 148, 150) angeordnet sind, wobei ein Nutensatz (146, 148 oder 150) mit dem jeweiligen ringförmigen Glied (100, 102 oder 104) verbunden ist und die Zungen (142, 144) der Platte (138), welche das ringförmige Glied (100) ergibt, aufnimmt;
die Nutensätze (146, 148, 150) ringsherum so angeordnet ist, daß die Zähne (114, 146, 154, 156) des jeweiligen zugehörigen ringförmigen Glieds (100, 102, 104) mit einem Bruchteil des bestimmten gemeinsamen Winkels zu den Zähnen (114, 116, 154, 156) eines anderen ringförmigen Glieds (100, 102, 104) umfangsindexiert sind, wobei der Bruch so gewählt ist, daß mindestens eine der Motorphasen zu jeder Zeit, wird die Wicklung (70, 172) des zugehörigen Statorpolbauteils (58 oder 190) der mindestens einen Motorphase elektrisch erregt, eine Drehkraft zum Drehen des Rotors (16) erzeugen kann.

9. Elektromotor nach Anspruch 1, dadurch gekennzeichnet, daß das Statorpolbauteil (240) ein Gehäuse (228) hat, das aus wärmeleitendem Material besteht, und die Wicklung (242) und die Pole (244, 246) des Statorpolbauteils (240) im Gehäuse (228) mit den Polen (244, 246), die aus dem Gehäuseinneren herausgehen, montiert sind.

10. Elektromotor nach Anspruch 9, dadurch gekennzeichnet, daß das Innere des jeweiligen Gehäuses (228) ein wärmeleitendes Material (248) enthält, das innig das Gehäuse (228) und die jeweiligen Pole (244, 246) sowie die Wicklung (242), die im Gehäuse (228) montiert sind, kontaktiert.

## Revendications

1. Moteur électrique (10 ou 170) comprenant un stator (14), un carter (12 ou 172) de forme générale cylindrique possédant une surface extérieure (24) et une surface intérieure (26) pour loger le stator (14) et un rotor (16 et 176) monté à l'intérieur du carter (12 ou 172) et supporté en rotation par rapport au carter (12 ou 172) autour d'un axe de rotation (22), le moteur (10 ou 170) étant caractérisé par :
- un grand nombre d'ouvertures (38 ou 186) s'étendant entre la surface extérieure (24) et la surface intérieure (26) du carter (12 ou 172);
- le stator (14) comprenant un grand nombre d'ensembles (54 ou 190) polaires du stator séparés, chacun des ensembles (54 ou 190) polaires du stator comprenant au moins une paire de pôles (62, 64) couplés magnétiquement et des moyens à bobines (70, 72) à fonctionnement électrique couplés fonctionnellement à l'ensemble (54 ou 190) polaire du stator pour produire un champ magnétique dans chacun des pôles du stator (62, 64), chacun des pôles du stator possédant une face polaire (66 ou 68);
- des moyens (72, 74, 76, 80, 82) fixant de manière détachable chacun des ensembles (54 ou 190) polaires du stator sur la surface extérieure (24) du carter (12 ou 172) avec les moyens à bobines associés (70, 72) externes au carter (12 ou 172) et les pôles associés (62, 64) s'étendant à travers les ouvertures (36 ou 186) du carter (12 ou 172), les ensembles (54 ou 190) polaires du stator étant espacés les uns des autres sur la circonférence de la surface extérieure (24) du carter (12 ou 172), les faces polaires (66, 68) associées avec les nombreux ensembles (54 ou 190) polaires du stator étant orientées selon une disposition cylindrique centrée autour de l'axe de rotation (22) avec un angle prédéterminé;
- le rotor (16 ou 176) possédant un tronçon-support (20 ou 200) et de nombreux organes magnétiques (114, 116 ou 208) fixés à et espacés les uns des autres circonférentiellement et proches du tronçon-support (20 ou 200), chacun des organes magnétiques (114, 116 ou 208) ayant une face d'organe, les faces d'organe des organes magnétiques (114, 116 ou 208) étant orientées selon une disposition cylindrique centrée autour de l'axe de rotation (22) avec un angle qui est plus petit d'une valeur prédéterminée que l'angle de la disposition cylindrique des faces (66, 68); et
- les faces polaires (66, 68) et les faces d'organe magnétique étant disposées d'une manière telle que, durant chaque rotation du rotor (16, 176), les faces des pôles (66, 68) du grand nombre d'ensembles (54 ou 190) polaires du stator coïncident très souvent et simultanément avec les faces des organes magnétiques (114, 116 ou 208) pour former à chaque face de pôle (66, 68) un espace d'air (110 ou 112; ou 210 ou 212) ayant une dimension radiale correspondant à la quantité prédéterminée et telle que les organes magnétiques (114, 116 ou 208 complètent un circuit magnétique local (108) avec chacun des ensembles (54 ou 190) polaires du stator à chaque fois que les espaces d'air (110, 112 ou 210, 212) sont formés, le circuit magnétique local (108) associé à chacun des ensembles (54 ou 190) polaires du stator comprenant les pôles du stator couplés magnétiquement (62, 64) de l'ensemble (54 ou 190) polaire du stator associé, les espaces d'air (110, 112 ou 210, 212) formés au niveau des faces des pôles (66, 68) de l'ensemble (54 ou 190) polaire du stator associé, et l'organe magnétique ou les organes magnétiques (114, 116 ou 208) délimitant les espaces d'air (110, 112 ou 210, 212) avec les faces des pôles (66, 68) de l'ensemble (54 ou 190) polaire du stator associé.

2. Moteur électrique (10 ou 170) selon la revendication 1, caractérisé en ce que le carter (12 ou 172) est formé d'un matériau non magnétique qui a une masse spécifique plus faible que celle des matériaux constitutifs des pôles (62, 64) des ensembles (54 ou 190) polaires du stator et les organes magnétiques (114, 116 ou 208) du rotor (16 ou 176).

3. Moteur électrique (10 ou 170) selon la revendication 1 ou 2, caractérisé en ce que chacun des ensembles (54) polaires du stator comprend un organe (60) de forme générale en U formé d'un matériau magnétique, les organes (60) en forme de U des ensembles (54) polaires du stator étant situés dans un plan commun perpendiculaire à l'axe de rotation (22), et les faces polaires (66, 68) des nombreux ensembles (54) polaires du stator étant régulièrement espacés les uns des autres circonférentiellement d'un angle prédéterminé dans le plan commun.

4. Moteur électrique (170) selon la revendication 1 ou 2, caractérisé en ce que chacun des ensembles (190) polaires du stator comprend un organe de forme générale en U réalisé dans un matériau magnétique, chacun des organes en U est aligné avec un plan contenant l'axe de rotation (22), et les organes (60) en forme de U coïncident circonférentiellement et sont régulièrement espacés circonférentiellement.

5. Moteur électrique (10 ou 170) selon l'une quelconque des revendications précédentes, caractérisé en ce que les nombreux ensembles (54 ou 190) polaires du stator et les nombreux organes magnétiques (114, 116 ou 208) réalisent une première phase du moteur électrique (10 ou 170), le moteur électrique (10 ou 170) comprenant des seconde et troisième phases supplémentaires du moteur sensiblement identiques à la première phase, les deuxième et troisième phases du moteur comprenant des ensembles (84, 86 ou 190, 194) polaires du stator fixés à l'extérieur du carter (12 ou 172) et des organes magnétiques (154, 156 ou 216, 218) fixés au tronçon-support (20 ou 200, 202, 204) du rotor (16 ou 176).

6. Moteur électrique (10 ou 170) selon la revendication 5, caractérisé en ce que les organes magnétiques (54, 84, 86 ou 190, 192, 194) de chacune des phases du moteur sont repérés circonférentiellement par rapport aux organes magnétiques (54, 84, 86 ou 190, 192, 194) des autres phases du moteur d'une manière telle que au moins l'une des phases du moteur peut générer un couple pour faire tourner le moteur (16 ou 176) à n'importe quel moment lorsque les moyens à bobine (70, 72) associés avec une phase du moteur sont excités électriquement.

7. Moteur électrique (10) selon la revendication 5 ou 6, caractérisé en ce que le tronçon-support (20) du rotor (16) a une surface extérieure de forme générale cylindrique réalisée avec des rainures longitudinales (146, 148, 150) ouvertes aux extrémités;
- le rotor (16) comprend de nombreuses plaques annulaires identiques (138) en un matériau magnétique, chaque plaque (138) possédant une ouverture centrale qui loge les tronçons-supports (20) et des pattes (142, 144) s'étendant radialement vers l'intérieur dans les rainures (146) du tronçon-support (20 ou 200), chaque plaque (138) possédant une périphérie comprenant de nombreuses pattes qui s'étendent radialement vers l'extérieur et qui sont irrégulièrement espacées circonférentiellement le long de la périphérie; et
- le rotor (16) comprend des entretoises (130, 132) séparant les plaques (138) en trois jeux de plaques placées axialement côte-à-côte, chaque jeu de plaques définissant un organe annulaire (100, 102 ou 104) avec des dents périphériques (114, 116, 154, 156) qui sont régulièrement espacées circonférentiellement d'un angle prédéterminé commun, les dents (114, 116, 154, 156) de chaque organe annulaire (100, 102 ou 104) constituant les organes magnétiques (114, 116, 154, 156) d'une phase distincte des phases du moteur.

8. Moteur électrique (10) selon la revendication 7, caractérisé en ce que les rainures (146, 148, 150) de l'organe-support sont disposées en jeux de rainures (146, 148, 150), un des jeux de rainures (146, 148 ou 150) étant associé avec chacun des organes annulaires (100, 102 ou 104) et logeant les pattes (142, 144) des plaques (138) définissant l'organe annulaire (100);
- les jeux de rainures (146, 148, 150) étant disposés circonférentiellement d'une manière telle que les dents (114, 116, 154, 156) associées avec chacun des organes annulaires (100, 102, 104) sont repérées circonférentiellement par une fraction d'un angle prédéterminé commun par rapport aux dents (114, 116, 154, 156) des autres organes annulaires (100, 102, 104), la fraction étant choisie d'une manière telle que au moins l'une des phases du moteur peut générer un couple pour faire tourner le rotor (16) à n'importe quel moment lorsque les moyens à bobine (70, 72) associés aux ensembles (54 ou 190) polaires de stator d'au moins une phase du moteur sont excités électriquement.

9. Moteur électrique selon la revendication 1, caractérisé en ce que les ensembles (240) polaires du stator comprennent un carter (228) réalisé en un matériau conduisant la chaleur et les moyens à bobines (242) et les pôles (244, 246) de l'ensemble (240) polaire du stator sont fixés à l'intérieur du carter (228) avec les pôles (244, 246) s'étendant à partir de l'intérieur du carter.

10. Moteur électrique selon la revendication 9, caractérisé en ce que l'intérieur de chaque carter (228) comprend un matériau (248) conduisant la chaleur intimement en contact avec le carter (228) et chacun des pôles (244, 246) et les moyens à bobines (242) étant montés à l'intérieur du carter (228).
